# EUROPÄISCHE PATENTSCHRIFT

(11) **EP 2 008 858 B1**
(45) Veröffentlichungstag und Bekanntmachung des Hinweises auf die Patenterteilung: **25.07.2012**
(21) Anmeldenummer: 08010776.6
(22) Anmeldetag: 13.06.2008
(51) Int. Cl.: B60K 15/035, F16K 24/04

(54) **Entlüftungsvorrichtung für den Kraftstofftank eines Kraftfahrzeugs**
Ventilation device for the fuel tank of a motor vehicle
Dispositif d'aération pour le réservoir de carburant d'un véhicule automobile

(30) Priorität: 27.06.2007 DE 102007030039; 25.10.2007 DE 102007050970
(43) Veröffentlichungstag der Anmeldung: 31.12.2008
(73) Patentinhaber: Alfmeier Präzision AG Baugruppen und Systemlösungen, 91757 Treuchtlingen (DE)
(72) Erfinder: Roscher, Richard, 91799 Langenaltheim (DE); Theissler, Jürgen, 91522 Ansbach (DE)
(74) Vertreter: Höfner, Gerhard

(56) Entgegenhaltungen:
- DE-A1- 19 707 841
- DE-A1- 19 921 665
- DE-U1-202005 020 971
- US-A- 5 680 848
- US-A1- 2005 126 633
- US-A1- 2005 284 539

## Beschreibung

Die Erfindung betrifft eine Entlüftungsvorrichtung für den Kraftstofftank eines Kraftfahrzeugs. Die Entlüftungsvorrichtung umfasst ein im Kraftstofftank angeordnetes Entlüftungsventil, das der Be- und Entlüftung dient. Im Gehäuse des Entlüftungsventils ist eine Be- und Entlüftungsöffnung vorhanden, die im Folgenden vereinfachend mit Entlüftungsöffnung bezeichnet wird. Das Entlüftungsventil ist in einer oberen Tankwand vorhanden, wobei die Entlüftungsöffnung mit der Atmosphäre in Verbindung steht. Das Entlüftungsventil ist als Schwimmerventil ausgestaltet, d.h. in seinem Gehäuse ist ein an seiner Oberseite ein mit der Entlüftungsöffnung zusammenwirkendes Dichtelement tragender Schwimmer zwischen einer Schließstellung und einer Ruhestellung beweglich gelagert. In der Ruhestellung ist der Schwimmer in einer unteren Position im Gehäuse angeordnet, wobei das Dichtelement von der Entlüftungsöffnung entfernt ist. Derartige Ventile dienen allgemein dazu, eine Entlüftungsöffnung zu verschließen, um einen Austritt von Kraftstoff zu vermeiden. Sie dienen beispielsweise auch dazu, den Füllstand des Kraftstoffs zu begrenzen. Beim Betanken, das über ein am Kraftstofftank vorhandenes Einfüllrohr erfolgt, wird der Schwimmer von dem ansteigenden Kraftstoff aufgrund von Auftriebskräften angehoben und gelangt letztlich in seine Schließstellung, in der er das Dichtelement mit einer mehr oder weniger großen Anpresskraft gegen die Entlüftungsöffnung drückt. Ab diesem Moment kann von dem in den Kraftstofftank einströmenden Kraftstoff verdrängtes Gas, gemeint ist damit ein Kraftstoff-Luft-Gemisch, nicht mehr über das Entlüftungs-ventil bzw. die Entlüftungsöffnung den Tank verlassen. Als Folge des weiter in den Kraftstofftank einfließenden Kraftstoffs steigt der Kraftstoffpegel zunächst weiter an, wodurch es zu einer Überfüllung kommt, d.h. dass das vom Schwimmer verdrängte Kraftstoffvolumen zunimmt, dass der Schwimmer also mehr als erforderlich in den Kraftstoff eintaucht, was mit einer entsprechenden Zunahme der auf das Dichtelement wirkenden Anpresskraft verbunden ist. Schließlich kommt es durch im Einfüllrohr des Kraftstofftanks aufsteigenden Kraftstoff bei einem bestimmten Kraftstoffpegel, dem Abschaltpegel, zu einem Abschalten der Zapfpistole.

Eine solche Entlüftungsvorrichtung ist in der US 5680848 offenbart, die alle Merkmale des Oberbegriffs des Anspruchs 1 zeigt.

Aufgrund der genannten Überfüllung beim Betanken und gegebenenfalls auch durch einen sich beim Fahrzeugbetrieb aufbauenden Tankinnendruck ist das Wiederöffnen der Entlüftungsöffnung mit einer Hysterese (Wiederbetankungshysterese) behaftet, d.h. die Entlüftungsöffnung bleibt so lange verschlossen, bis der Kraftstoff durch Verbrauch auf einen niedrigeren Pegel, dem Öffnungspegel abgesunken ist. Je nach der horizontalen Querschnittsfläche des Kraftstofftanks ist dieser erst bei einem Verbrauch von mehreren Litern Kraftstoff, beispielsweise von 6 Litern und mehr, erreicht. Dies ist zum einen nachteilig, weil für eine relativ lange Betriebsphase im Tank ein gegebenenfalls diesen schädigender Tankinnendruck vorhanden ist. Zum anderen führt der genannte Effekt im Mietwagengeschäft dazu, dass nach kürzeren Fahrstrecken ein Wiederbetanken des Mietwagens nicht möglich ist, so dass der Verbrauch zu Lasten des nächsten Kunden oder des Vermieters geht.

Davon ausgehend ist es die Aufgabe der Erfindung, eine Entlüftungsvorrichtung für den Kraftstofftank eines Kraftfahrzeugs vorzuschlagen, mit der die genannten Nachteile umgangen werden können.

Diese Aufgabe wird durch eine Entlüftungsvorrichtung nach Anspruch 1 gelöst. Diese umfasst, wie bereits erwähnt, ein Entlüftungsventil mit einem eine Entlüftungsöffnung aufweisenden Ventilgehäuse. In diesem ist an einer oberen, der Entlüftungsöffnung nahen Position wenigstens eine dem Gas- und Kraftstoffdurchtritt dienende Einlassöffnung, und an einer unteren Position wenigstens eine Entleerungsöffnung vorhanden. Ansonsten sind in dem sich zwischen den genannten Öffnung erstreckenden Gehäusebereich keine weiteren Öffnungen eingebracht. Damit beim Betanken kein Kraftstoff über die Entleerungsöffnung in den Innenraum des Ventilgehäuses eindringen kann, ist dieses von einem Dichtelement eines Absperrventils verschließbar. Auf welche Weise das Absperrventil arbeitet ist im Prinzip unerheblich. So ist beispielsweise ein elektromagnetisch betätigtes Ventil denkbar. Bevorzugt wird jedoch ein Ventil mit einem aufschwimmenden Dichtelement eingesetzt, da ein solches Ventil bei geringem Herstellungs- und Montageaufwand zuverlässig arbeitet. Durch die bisher beschriebene Ausgestaltung wird erreicht, dass der Kraftstoff im Tank auf einen Pegel ansteigen kann, der höher liegt als der zum Verschluss der Entlüftungsöffnung innerhalb des Ventilgehäuses erforderliche Kraftstoff- bzw. Schließpegel. Der Schwimmer bleibt mangels im Ventilgehäuse vorhandenen Kraftstoffs zunächst in seiner Ruhestellung. Erst wenn der Kraftstoff die weit oben, oberhalb des Schließpegels am Entlüftungsventil angeordnete Einlassöffnung erreicht, kann Kraftstoff in den Innenraum des Ventilgehäuses hineinlaufen und den Schwimmer in seine Schließstellung anheben. Die bisher beschriebene Ausgestaltung hätte zwar den Vorteil eines höheren Kraftstoff-Füllstandes im Tankinnenraum, also den Vorteil einer besseren Ausnutzung des Tankvolumens. Nachteilig wäre aber, dass sehr viel Kraftstoff im Fahrzeugbetrieb verbraucht werden müsste, damit der Kraftstoffpegel im Tank auf ein Niveau gesunken ist, bei dem das Absperrventil die Entleerungsöffnung im Ventilgehäuse freigibt und der Kraftstoff in den Tankinnenraum abfließen kann und der Schwimmer die Entlüftungsöffnung freigibt.

Hier kommen nun weitere Gestaltungsmerkmale ins Spiel, die die Wiederbetankungshysterese deutlich verringern: Es ist ein im Tankinnenraum positionierbarer Speicherbehälter vorhanden, der über einen Verbindungskanal mit dem Innenraum des Ventilgehäuses verbunden ist, und zwar derart, dass darin vorhandener Kraftstoff in den Speicherbehälter abfließen kann, wobei der Strömungsquerschnitt des Verbindungskanals kleiner ist als der Öffnungsquerschnitt der Einlassöffnung. Aufgrund der genannten Abmessung des Verbindungskanals ist gewährleistet, dass der Kraftstoffabfluss in den Speicherbehälter das Anheben des Schwimmers in seine Schließstellung und den Verschluss der Entlüftungsöffnung nicht wesentlich beeinflusst. Nachdem die Entlüftungsöffnung verschlossen ist, kommt es durch ein Ansteigen des Kraftstoffs im Einfüllrohr zum Abschalten der Zapfpistole. Der Strömungsquerschnitt des Verbindungskanal ist nun weiterhin so ausgelegt, dass der im Innenraum des Ventilgehäuses vorhandene Kraftstoff innerhalb einer gewissen Zeitspanne, beispielsweise mehrerer Sekunden, in den Speicherbehälter läuft. Der Schwimmer kehrt dabei in seine Ruhestellung zurück, so dass - abhängig von der Aufnahmekapazität des Speicherbehälters mehrere Nachtankschritte möglich sind.

Da die Aufnahmekapazität des Speicherbehälters begrenzt ist, muss eine Entleerung erfolgen. Zu diesem Zweck ist eine Entleerungseinrichtung vorhanden. Diese kann beispielsweise eine Absaugvorrichtung sein, etwa ein in einem Kraftstofftank ohnehin vorhandenes, eine Saugstrahlpumpe umfassendes Saugsystem. Vorzugsweise erfolgt die Entleerung jedoch über eine am Speicherbehälter vorhandene Entleerungsöffnung, die mit einem Dichtelement eines Absperrventils verschließbar ist.

In den Unteransprüchen sind vorteilhafte Ausgestaltungen angegeben, die in der folgenden, auf die beigefügten Zeichnungen Bezug nehmenden Beschreibung der Erfindung näher erläutert werden. Von den Zeichnungen zeigen:
- Fig. 1: bis 5 schematische Abbildungen, die den grundsätzlichen Aufbau des Entlüftungsventils einer erfindungsgemäßen Entlüftungsvorrichtung sowie dessen Funktionsweise aufzeigen,
- Fig. 6: ein konkretes Ausführungsbeispiel eines Entlüftungsventils in Seitenansicht,
- Fig. 7: eine Draufsicht auf die Unterseite (Pfeil VII in Fig. 6),
- Fig. 8: eine Draufsicht auf die Oberseite des Ventils (Pfeil VIII in Fig. 6),
- Fig. 9: eine Fig. 8 entsprechende Ansicht, wobei jedoch der Deckel des Entlüftungsventils entfernt ist,
- Fig. 10: einen Längsschnitt entsprechend Linie X-X in Fig. 7,
- Fig. 11: einen Längsschnitt entsprechend der Linie XI-XI in Fig. 7.

Das in den Abbildungen zum Teil schematisch dargestellte Entlüftungsventil 1 ist in eine Montageöffnung 2 in der oberen Wand 3 eines Kraftstofftanks 4 eingesetzt. Es liegt dabei mit einem Flansch 5 auf der Außenseite 6 der Wand 3 des Kraftstofftanks 4 auf. Der Flansch 5 ist von einer der Be- und Entlüftung des Tankinnenraums 7 dienenden Entlüftungsöffnung 8 durchsetzt. Er trägt einen Anschlussstutzen 9, der über eine Leitung 10 mit einem Aktivkohlebehälter 13 verbunden ist, wobei dieser beispielsweise über eine Leitung 12 mit der Umgebung in Verbindung steht. Der Anschlussstutzen 9, die Leitungen 10,12, der Aktivkohlebehälter 13 und die Leitung 14 sind Bestandteile des Entlüftungssystems des Kraftstofftanks 4.

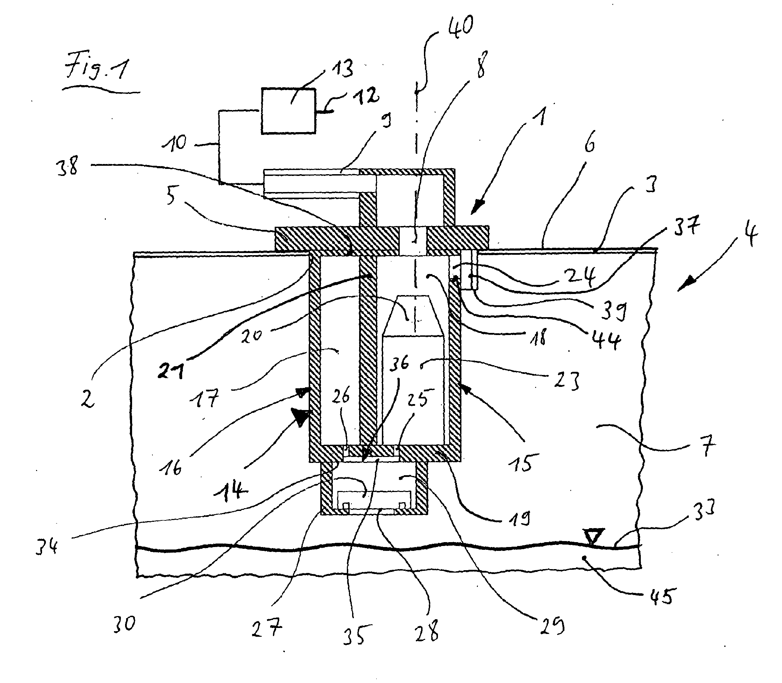

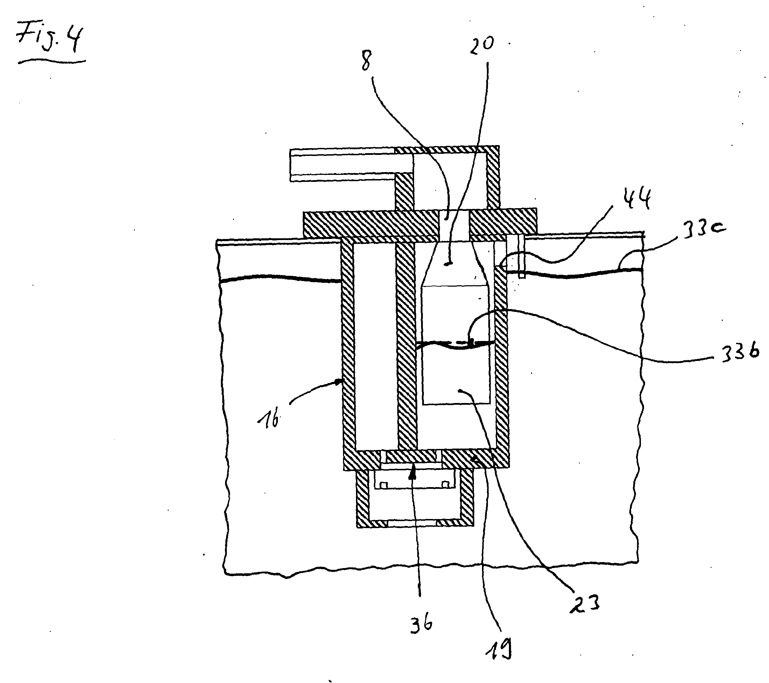

Unterseits am Flansch 5 ist ein Gehäuse 14 angesetzt, das ein Ventilgehäuse 15 und einen Speicherbehälter 16 aufweist, die integrale Bestandteile des Gehäuses 14, vorzugsweise ein Kunststoff-Spritzgussteil, sind. Denkbar ist aber auch ein separater, innerhalb des Kraftstofftanks angeordneter Speicherbehälter. Der Innenraum 17 des Speicherbehälters 16 ist durch eine Trennwand 21 von dem Innenraum 18 des Ventilgehäuses 15 abgegrenzt und an das Entlüftungssystem des Kraftstofftanks 4 angeschlossen. Das Ventilgehäuse 15 und der Speicherbehälter 16 sind unterseits von einem gemeinsamen Boden 19 verschlossen. Im Ventilgehäuse 15 ist ein auf seiner Oberseite ein Dichtelement 20 tragender Schwimmer 23 zwischen einer Ruhestellung (Fig. 1) und einer Schließstellung (Fig. 4) beweglich gelagert. In der Ruhestellung gibt das Dichtelement 20 die Entlüftungsöffnung 8 frei, während es in der Schließstellung von dem aufgrund von Auftriebskräften angehobenen Schwimmer 23 gegen die Entlüftungsöffnung 8 gedrückt wird und diese verschließt.

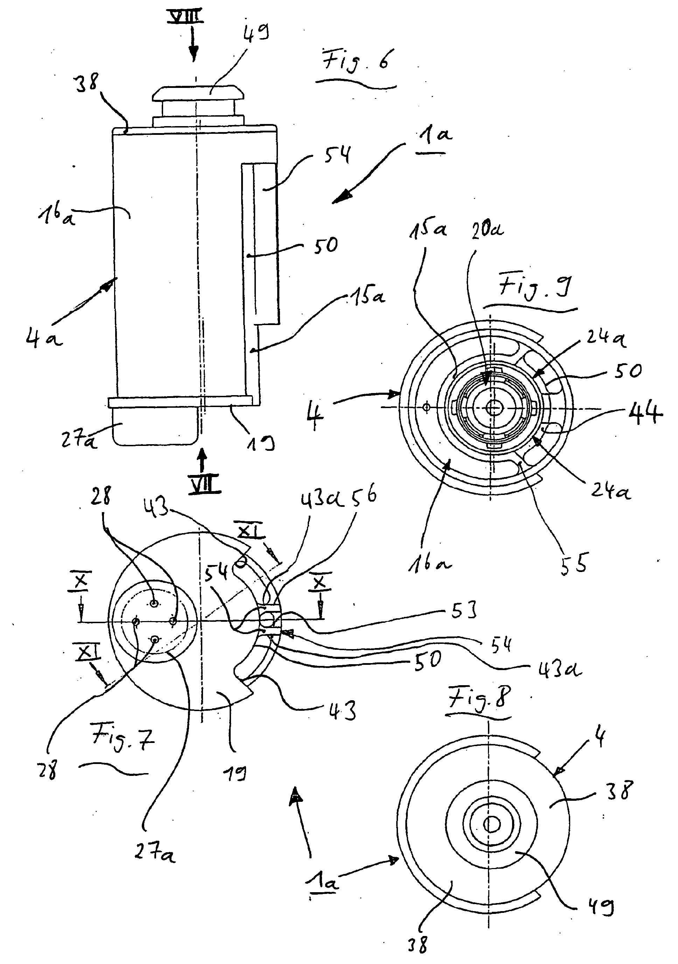

Das Entlüftungsventil 1 ist so ausgestaltet, dass ein der Be-und Entlüftung dienender Gasaustausch lediglich an einer der oberen Tankwand 3 bzw. der Entlüftungsöffnung 8 nahen Position des Ventilgehäuses erfolgen kann. Zu diesem Zwecke ist in dem genannten Bereich eine Öffnung vorhanden, die wegen ihrer später noch genauer erläuterten Funktion, nämlich einen Zutritt von Kraftstoff in den Innenraum 7 des Ventilgehäuses 15 zu ermöglichen, als Einlassöffnung 24 bezeichnet wird. Weitere Öffnungen, die den Zutritt von Kraftstoff in das Ventilgehäuse 15 ermöglichen, sind nicht vorhanden. In dem Boden 19 des Gehäuses 14 sind zwar Entleerungsöffnungen 25, 26 vorhanden, deren Funktion später noch genauer erläutert wird. Ein Eindringen von Kraftstoff in diese Öffnungen ist aber durch ein außen am Boden 19 angeordnetes Absperrventil 27 verhindert. Dieses weist unterseits eine Öffnung 28 auf, durch die Kraftstoff in seinen Innenraum 29 eindringen kann. Im Innenraum 29 ist ein aufschwimmendes, etwa in Form einer kreisrunden Scheibe ausgebildetes Dichtelement 30 vorhanden. Wenn der Kraftstoffpegel 33, etwa ausgehend von der in Fig. 1 gezeigten Situation ansteigt, schwimmt das Dichtelement 30 auf. Die Oberseite des Dichtelementes 30 ist beispielsweise planeben ausgebildet und wirkt mit einem die beiden Entleerungsöffnungen 25, 26 umgreifenden Dichtsitz 34 zusammen. Dichtsitz 34 und Dichtelement 30 sind so ausgestaltet, dass in der Schließstellung zwischen dem Dichtelement 30 und den Entleerungsöffnungen 26, 25 ein diese Öffnungen verbindender Hohlraum vorhanden ist. Beispielsweise ist eine die Entleerungsöffnungen 25, 26 miteinander verbindende Nut 35 im Boden 19 vorhanden. Die Entleerungsöffnungen 26, 25 zusammen mit der Nut 35 bilden einen Verbindungskanal 36, der sich zwischen den Entleerungsöffnungen 25, 26 erstreckt und den Innenraum 18 des Ventilge-häuses 15 mit dem Innenraum 17 des Speicherbehälters 16 verbindet. Bei dem beschriebenen Ausführungsbeispiel werden die Entleerungsöffnungen 25, 26 von einem gemeinsamen Absperrventil bzw. Dichtelement gesteuert. Im Falle eines separaten Speicherbehälters ist jeder Öffnung ein eigenes Absperrventil zugeordnet. Mit Radialabstand vor der Einlassöffnung 24 ist eine sich etwa vertikal erstreckende, zumindest einen Teil der Öffnungsfläche der Einlassöffnung 24 überdeckende Schürze 37 vorhanden, die beispielsweise am Flansch 5 oder einem das Gehäuse 14 verschließenden Deckel 38 angeformt ist. Der untere Rand 39 der Schürze 37 verläuft - bezogen auf den Einbauzustand des Entlüftungsventils 1 - im Wesentlichen in einer Horizontalebene bzw. in einer rechtwinklig zur Mittellängsachse 40 des Ventilgehäuses 15 verlaufenden Ebene. Die Schürze 37 ist an seitliche bzw. sich in Umfangsrichtung des Ventilgehäuses 15 gegenüberliegende Randbereiche 43 (siehe Fig. 7) der Eingangsöffnung 24 angeformt. Die Einlassöffnung 24 weist einen unteren Rand 44 auf, der ebenfalls in einer Horizontalebene bzw. in einer sich rechtwinklig zur Mittellängsachse 40 des Ventilgehäuses 15 erstreckenden Ebene verläuft.

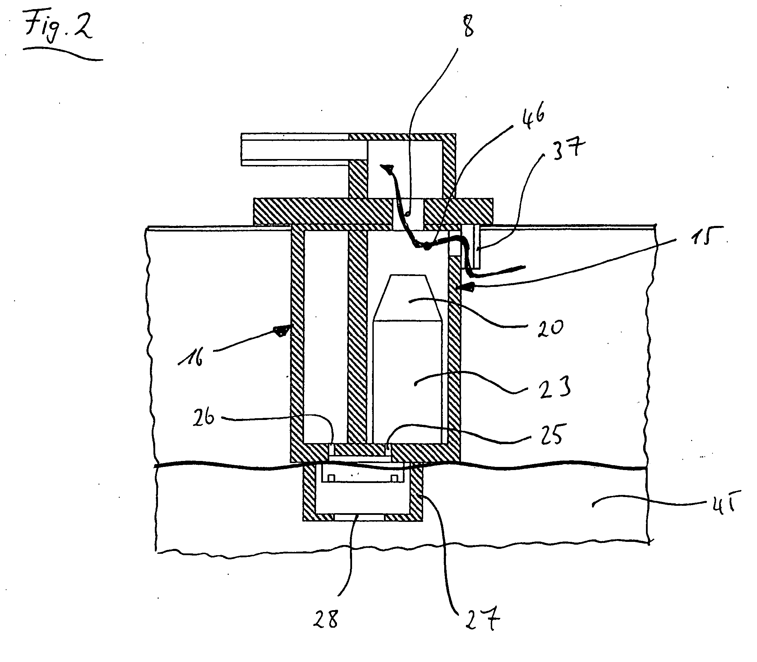

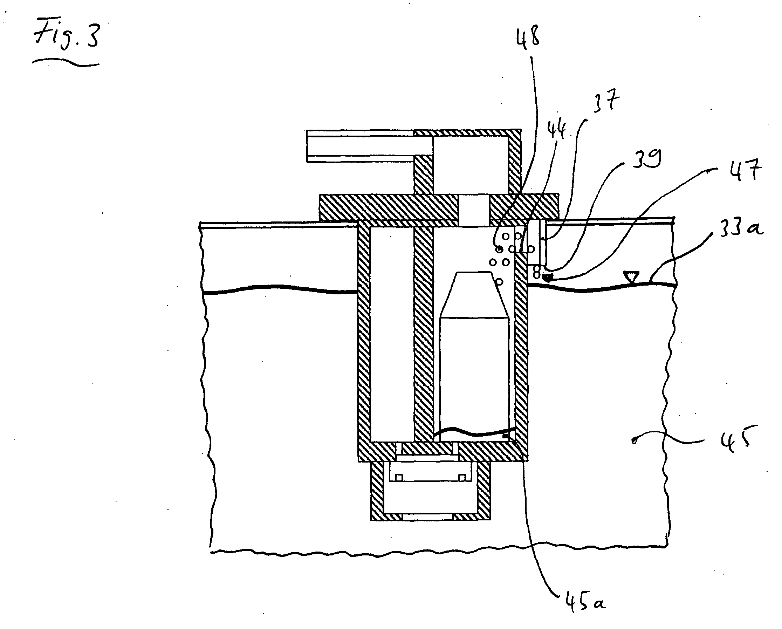

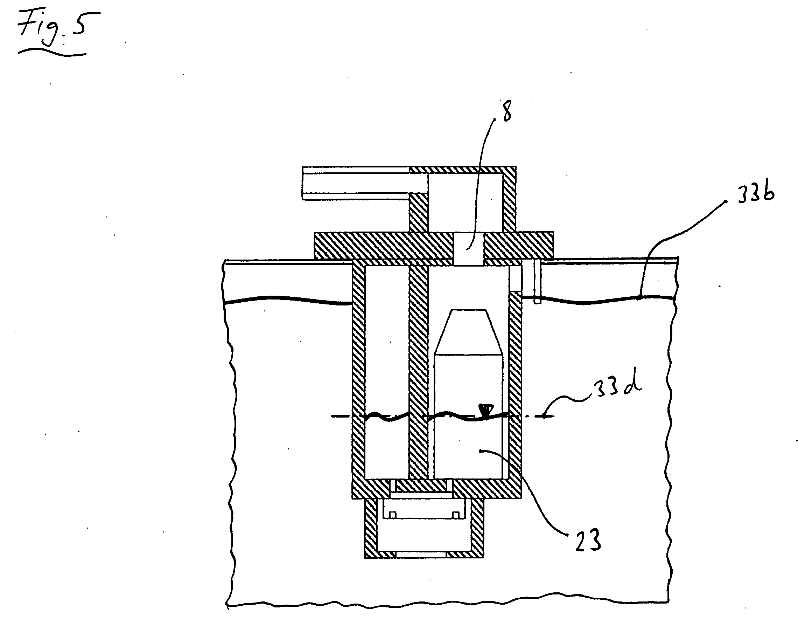

Ein mit einem Entlüftungsventil 1 der beschriebenen Art bestückter Kraftstofftank 4 arbeitet wie folgt: Wenn während des Betankens der Kraftstoffpegel 33, etwa ausgehend von der in Fig. 1 gezeigten Situation ansteigt, schwimmt zunächst das Dichtelement 30 des Absperrventils 27 auf und verschließt die Entleerungsöffnungen 25, 26, so dass kein Kraftstoff 45 in den Speicherbehälter 16 oder das Ventilgehäuse 15 gelangen kann (Fig. 2). Das durch den ansteigenden Kraftstoff verdrängte Gas strömt zwischen der Schürze 37 und dem Ventilgehäuse 15 hindurch in die Einlassöffnung 24 und verlässt den Kraftstofftank 4 über die Entlüftungsöffnung 8, was durch den Pfeil 46 in Fig. 2 angedeutet ist. In der in Fig. 3 gezeigten Situation ist der Kraftstoff 45 schon soweit angestiegen, dass er beinahe den unteren Rand 39 der Schürze 37 erreicht hat. Zwischen dem Rand 39 und dem Kraftstoffpegel 33a ist dann nur noch ein relativ schmaler Spalt 47 vorhanden, durch den Gas hindurch strömen kann. Aufgrund des sich zusehends verengenden Spaltes 47 nimmt die Strömungsgeschwindigkeit des Gases zu, so dass Kraftstoff etwa in Form von Tropfen 48 mitgerissen und in das Ventilgehäuse 15 eingetragen wird. Dieses füllt sich somit zusehendst mit Kraftstoff 45a (Fig. 3). Die Folge ist, dass der Schwimmer 23 aufschwimmt und schließlich mit seinem Dichtelement 20 die Entlüftungsöffnung 8 verschließt (Fig. 4). Dabei stellt sich ein bestimmter Kraftstoffpegel, der Schließpegel 33b ein. Etwa ab diesem Zeitpunkt ist ein weiterer Kraftstoffeintrag in das Ventilgehäuse 15 nicht mehr erforderlich. Um einen Kraftstoffeintrag in der in Fig. 4 gezeigten Schließstellung des Schwimmers 23 zu unterbinden oder zu verringern kann es zweckmäßig sein, wenn sich die Schürze 37 nach unten über die Einlassöffnung 24 hinaus erstreckt, wenn also deren unterer Rand 39 geodätisch unterhalb des unteren Randes 44 der Einlassöffnung angeordnet ist. Nach dem Verschluss der Entlüftungsöffnung 8 zufließender Kraftstoff erhöht den Kraftstofffüllstand allenfalls nur noch geringfügig (Kraftstoffpegel 33c in Fig. 4), wodurch sich ein Tankinnendruck aufbaut und Kraftstoff im Einfüllrohr (nicht gezeigt) des Kraftstofftanks ansteigt und ein Abschalten der Zapfpistole bewirkt. Durch den Verbindungskanal 36 im Boden 19 fließt Kraftstoff in den Speicherbehälter 16, so dass der den Verschluss der Entlüftungsöffnung 8 bewirkende Kraftstoffpegel 33b (Schließpegel) absinkt, wobei am Ende im Ventilgehäuse 15 und im Speicherbehälter 16 nivellierte Kraftstoffpegel 33d vorhanden sind (Fig. 5). In diesem Zustand befindet sich der Schwimmer 23 wieder in seiner Ruhestellung, in der er die Entlüftungsöffnung 8 frei gibt. Die Strömungsquerschnitte der Entleerungsöffnungen 25, 26 und der sie miteinander verbindenden Nut 35 sind so gewählt, dass der Pegelausgleich im Ventilgehäuse 15 und Speicherbehälter 16 relativ langsam, etwa innerhalb eines Zeitraums von mehreren Sekunden stattfindet. Erst danach ist ein Nachtanken möglich, etwa um den zu zahlenden Betrag auf einen glatten Betrag aufzurunden. Die Aufnahmekapazität des Speicherbehälters 16 kann so bemessen sein, dass der in Fig. 5 gezeigte Zustand erst nach mehreren Nachtankschritten erreicht wird. Wird ausgehend von der in Fig. 5 gezeigten Situation das Fahrzeug in Betrieb gesetzt, so ist aufgrund der schon zu diesem Zeitpunkt geöffneten Entlüftungsöffnung 8 ein Wiederbetanken jederzeit, also etwa bereits nach einer kurzen Fahrstrecke problemlos möglich. Denkbar ist auch, dass für den Speicherbehälter 16 eine aktive Entleerung vorgesehen ist, dass er beispielsweise an eine im Kraftstofftank vorhandene Saugstrahlpumpe angeschlossen ist, die gegebenenfalls abhängig vom Kraftstofffüllstand im Speicherbehälter ansteuerbar ist.

In Fig. 6 bis 11 ist ein konkretes Ausführungsbeispiel eines Entlüftungsventils 1a in verschiedenen Ansichten gezeigt, wobei aber Flansch 5 und Anschlussstutzen 9 weggelassen sind. Zu deren Fixierung ist oberseits am Gehäuse 4a ein etwa zylinderförmiger Fortsatz 49 vorhanden. Der Speicherbehälter 16a und das Ventilgehäuse 15a sind Bestandteile eines einstückigen Kunststoff-Spritzgussteiles. Der Speicherbehälter 16a umfasst koaxial das im Wesentlichen zylindrisch ausgebildete Ventilgehäuse 15a auf einem Teil seines Umfangs (etwa 250°). An dem von dem Speicherbehälter 16a freigelassenen Umsatzabschnitt 50 sind zwei in Umfangsrichtung beabstandete Einlassöffnungen 24a vorhanden. Zwischen den Einlassöffnungen 24a sind zwei eine Nut 53 zwischen sich einschließende, parallel zur Mittellängsachse 40 des Ventilgehäuses 15a verlaufende Stege 54 vorhanden, die etwa radial aus dem Umfangsabschnitt 50 hervorstehen. Die in Umfangsrichtung weisenden Enden des Speicherbehälters 16a sind durch sich etwa radial und in Axialrichtung erstreckende Wandstege 55 gebildet. Die über den unteren Rand 44 der Einlassöffnungen 24a in Richtung auf den Deckel 38 des Gehäuses 4a hinaus stehenden Bereiche der Wandstege 55 bilden Randbereiche 43 der Einlassöffnungen 24a. Zwei weitere Randbereiche 43a werden durch die in Umfangsrichtung weisenden Seitenwände 56 der Stege 54 gebildet.

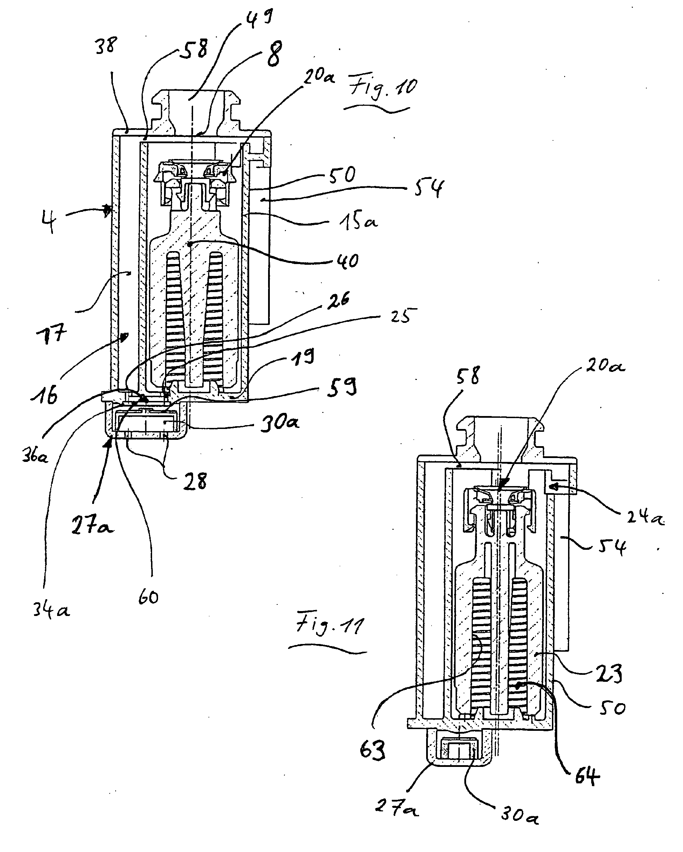

Wie insbesondere Fig. 10 und 11 entnehmbar ist, ist zwischen dem Ventilgehäuse 15a und einem das Gehäuse 4 verschließenden Deckel 38 ein Axialspalt 58 vorhanden. Auf diese Weise ist der Innenraum 17 des Speicherbehälters 16 über die Entlüftungsöffnung 8 des Entlüftungsventils 1 an das Entlüftungssystem des Kraftstofftanks angeschlossen. Das Einströmen von Kraftstoff über den Verbindungskanal 36 ist auf diese Weise problemlos möglich. Das Absperrventil 27a weist mehrere Öffnungen 28 auf. Das Dichtelement 30a des Absperrventils 27a ist im Wesentlichen topfförmig ausgestaltet, wobei seine Oberseite eine planebene Elastomerscheibe 59 trägt. Der am Boden 19 des Gehäuses 4 vorhandene Dichtsitz 34a steht rippenförmig aus dem Boden 19 vor. Im geschlossenen Zustand ist dadurch zwischen dem Dichtelement 34a ein die beiden Entleerungsöffnungen 25, 26 verbindender Hohlraum 60 vorhanden, wobei dieser zusammen mit den Entleerungsöffnungen 25, 26 den Verbindungskanal 36a bildet. Der Schwimmer 23 weist einen zentralen Hohlraum 63 auf, in dem eine Schraubendruckfeder 64 angeordnet ist. Diese dient zur Sicherstellung einer Roll-Over-Funktion bei einer unfallbedingten Kopflage des Kraftfahrzeuges. Das oberseits am Schwimmer 23 vorhandene Dichtelement 20a ist als mehrstufiges, beispielsweise als zweistufiges Dichtelement ausgebildet.

### Bezugszeichenliste

- 1: Entlüftungsventil
- 2: Montageöffnung
- 3: Wand
- 4: Kraftstofftank
- 5: Flansch
- 6: Oberseite
- 7: Tankinnenraum
- 8: Entlüftungsöffnung
- 9: Anschlussstutzen
- 10: Leitung
- 12: Leitung
- 13: Aktivkohlebehälter
- 14: Gehäuse
- 15: Ventilgehäuse
- 16: Speicherbehälter
- 17: Innenraum
- 18: Innenraum
- 19: Boden
- 20: Dichtelement
- 21: Trennwand
- 23: Schwimmer
- 24: Einlassöffnung
- 25: Entleerungsöffnung
- 26: Entleerungsöffnung
- 27: Absperrventil
- 28: Öffnung (von 27)
- 29: Innenraum (von 27)
- 30: Dichtelement
- 33: Kraftstoffpegel
- 34: Dichtsitz
- 35: Nut
- 36: Verbindungskanal
- 37: Schürze
- 38: Deckel
- 39: Rand
- 40: Mittellängsachse (von 15)
- 43: Randbereich
- 44: Rand (unterer von 24)
- 45: Kraftstoff
- 46: Pfeil
- 47: Spalt
- 48: Tropfen
- 49: Fortsatz
- 50: Umfangsabschnitt
- 53: Nut
- 54: Doppelsteg
- 55: Wandsteg
- 56: Seitenwand
- 58: Axialspalt
- 59: Elastomerscheibe
- 60: Hohlraum
- 63: Hohlraum
- 64: Schraubendruckfeder

## Patentansprüche

1. Entlüftungsvorrichtung für den Kraftstofftank eines Kraftfahrzeugs, umfassend ein Entlüftungsventil (1) mit einem eine Entlüftungsöffnung (8) aufweisenden Ventilgehäuse (15), einen im Ventilgehäuse (15) angeordneten, zwischen einer Ruhestellung und einer Schließstellung beweglichen Schwimmer (23), und ein an der Oberseite des Schwimmers (23) vorhandenes, mit der Entlüftungsöffnung (8) zusammenwirkendes Dichtelement (20), wobei der Schwimmer (23) in der Ruhestellung in einer unteren Position im Ventilgehäuse (15) angeordnet ist und das Dichtelement (20) die Entlüftungsöffnung (8) freigibt, und wobei in der Schließstellung der Schwimmer (23) aufgrund von Auftriebskräften das Schließelement (20) gegen die Entlüftungsöffnung (8) drückt und diese verschließt,
**gekennzeichnet durch**
folgende weitere Ausgestaltung:
- im Ventilgehäuse (15) ist an einer oberen, der Entlüftungsöffnung (8) nahen Position wenigstens eine dem Gas- und Kraftstoffdurchtritt dienende Einlassöffnung (24) und an einer unteren Position wenigstens eine Entleerungsöffnung (25) vorhanden, die von einem Dichtelement (30) eines Absperrventils (27) verschließbar ist,
- es ist ein Speicherbehälter (16) vorhanden, der über einen Verbindungskanal (36) mit dem Innenraum (18) des Ventilgehäuses (15) an einer unterhalb der Einlassöffnung liegenden Stelle verbunden ist, derart, dass ein im Innenraum (18) des Ventilgehäuses (15) vorhandener Kraftstoff in den Speicherbehälter (16) abfließen kann, wobei der Strömungsquerschnitt des Verbindungskanals (36) kleiner ist als der Öffnungsquerschnitt der Einlassöffnung (24),
- es ist eine Entleerungseinrichtung vorhanden, mit der Kraftstoff aus dem Speicherbehälter (16) entfernbar ist.

2. Entlüftungsvorrichtung nach Anspruch 1,
**dadurch gekennzeichnet,**
**dass** das Absperrventil (27) ein aufschwimmendes Dichtelement (30) aufweist.

3. Entlüftungsvorrichtung nach Anspruch 1 oder 2,
**dadurch gekennzeichnet,**
**dass** mit Radialabstand vor der Einlassöffnung (24) eine sich vertikal erstreckende, zumindest einen Teil der Öffnungsfläche der Einlassöffnung (24) überdeckende Schürze (37) vorhanden ist.

4. Entlüftungsvorrichtung nach Anspruch 3,
**dadurch gekennzeichnet,**
**dass** die Schürze an seitlichen Randbereichen (43) der Eingangsöffnung (24) angeformt ist.

5. Entlüftungsvorrichtung nach einem der vorhergehenden Ansprüche,
**dadurch gekennzeichnet,**
**dass** die Entleerungseinrichtung eine im Speicherbehälter vorhandene Entleerungsöffnung (26) und ein diese mit einem Dichtelement (30) verschließendes Absperrventil (27) umfasst.

6. Entlüftungsvorrichtung nach Anspruch 5,
**gekennzeichnet durch**
ein aufschwimmendes Dichtelement (30).

7. Entlüftungsvorrichtung nach einem der Ansprüche 1 bis 6,
**dadurch gekennzeichnet,**
**dass** die Entleerungseinrichtung eine Saugeinrichtung ist.

8. Entlüftungsvorrichtung nach einem der vorhergehenden Ansprüche,
**dadurch gekennzeichnet,**
**dass** der Speicherbehälter (16) mit der Atmosphäre in Verbindung steht.

9. Entlüftungsvorrichtung nach Anspruch 8,
**dadurch gekennzeichnet,**
**dass** der Speicherbehälter (16) mit einem Be- und Entlüftungssystem des Kraftstofftanks (4) verbunden ist.

10. Entlüftungsvorrichtung nach einem der vorhergehenden Ansprüche in Verbindung mit den Ansprüchen 1 und 5,
**dadurch gekennzeichnet,**
**dass** die Entleerungsöffnung (25) des Ventilgehäuses (15) und die Entleerungsöffnung (26) des Speicherbehälters (16) von einem gemeinsamen Dichtelement (30) verschließbar sind.

11. Entlüftungsvorrichtung nach Anspruch 10,
**dadurch gekennzeichnet,**
**dass** das Dichtelement (30) mit einem die Entleerungsöffnungen (25, 26) umgreifenden Ventilsitz (34) zusammenwirkt, wobei der Ventilgehäuse (15) und Speicherbehälter miteinander verbindende Verbindungskanal (36) innerhalb eines von dem Ventilsitz (34) umgriffenen Bereichs angeordnet ist und sich zwischen den genannten Öffnungen (25, 26) erstreckt..

12. Entlüftungsvorrichtung nach Anspruch 10 oder 11,
**dadurch gekennzeichnet,**
**dass** die Entleerungsöffnungen (25,26) auf der Unterseite eines dem Ventilgehäuse (15) und dem Speicherbehälter (16) gemeinsamen Bodens (19) ausmünden.

13. Entlüftungsvorrichtung nach einem der vorhergehenden Ansprüche,
**dadurch gekennzeichnet,**
**dass** der Speicherbehälter (16a) das zylindrisch ausgebildete Ventilgehäuse (15a) zumindest auf einem Teil seines Umfangs umfasst.

14. Entlüftungsvorrichtung nach Anspruch 13,
**dadurch gekennzeichnet,**
**dass** die wenigstens eine Einlassöffnung 24a des Ventilgehäuses (15a) in einem vom Speicherbehälter (16a) freigelassenen Umfangsabschnitt (50) des Ventilgehäuses (15a) angeordnet ist.

15. Entlüftungsvorrichtung nach Anspruch 14 in Verbindung mit Anspruch 3,
**dadurch gekennzeichnet,**
**dass** sich die Schürze (37) zwischen den in Umfangsrichtung weisenden Enden des Speicherbehälters (16a) erstreckt.

16. Entlüftungsvorrichtung nach einem der vorhergehenden Ansprüche,
**dadurch gekennzeichnet,**
**dass** der Speicherbehälter (16) und das Ventilgehäuse (15) einstückig miteinander verbunden sind.

## Claims

1. Ventilation device for the fuel tank of a motor vehicle, said ventilation device comprising a ventilation valve (1) with a valve housing (15) having a ventilation opening (8), a float (23) arranged in the valve housing (15) and movable between a resting position and a closing position, and a sealing element (20) provided on the upper side of the float (23) and cooperating with the ventilation opening (8), the float (23) being arranged in the resting position in a lower position in the valve housing (15) and the sealing element (20) releasing the ventilation opening (8), and, in the closing position of the float (23), the sealing element (20) pressing against the ventilation opening (8) and closing it due to buoyancy forces,
**characterised by**
the following further design:
- in the valve housing (15), at least one inflow opening (24) for allowing gas and fuel to flow through is provided in an upper position close to the ventilation opening (8), and at least one outflow opening (25), which can be closed by a sealing element (30) of a shut-off valve (27), is provided in a lower position,
- a storage container (16) is provided, which is connected via a connecting conduit (36) to the interior (18) of the valve housing (15) at a point located below the inflow opening in such a way that a fuel provided in the interior (18) of the valve housing (15) can flow out into the storage container (16), wherein the flow cross-section of the connecting conduit (36) is smaller than the cross-section of the inflow opening (24) ,
- an emptying device is provided, with which fuel can be removed from the storage container (16).

2. Ventilation device according to claim 1, **characterised in that** the shut-off valve (27) has a floating sealing element (30).

3. Ventilation device according to claim 1 or 2, **characterised in that** a vertically extending apron (37) covering at least part of the area of the inflow opening (24) is provided at a radial distance from the inflow opening (24).

4. Ventilation device according to claim 3, **characterised in that** the apron is moulded to lateral edge regions (43) of the inflow opening (24).

5. Ventilation device according to one of the preceding claims, **characterised in that** the emptying device comprises an emptying opening (26) provided in the storage container and a shut-off valve (27) closing said emptying opening by means of a sealing element (30).

6. Ventilation device according to claim 5, **characterised by** a floating sealing element (30).

7. Ventilation device according to one of claims 1 to 6, **characterised in that** the emptying device is a suction device.

8. Ventilation device according to one of the preceding claims, **characterised in that** the storage container (16) is connected to the ambient atmosphere.

9. Ventilation device according to claim 8, **characterised in that** the storage container (16) is connected to an aeration and ventilation system of the fuel tank (4).

10. Ventilation device according to one of the preceding claims in conjunction with claims 1 and 5, **characterised in that** the emptying opening (25) of the valve housing (15) and the emptying opening (26) of the storage container (16) can be closed by a common sealing element (30).

11. Ventilation device according to claim 10, **characterised in that** the sealing element (30) cooperates with a valve seat (34) surrounding the emptying openings (25, 26), the connecting conduit (36) connecting the valve housing (15) and the storage container being arranged within a region surrounded by the valve seat (34) and extending between said openings (25, 26).

12. Ventilation device according to claim 10 or 11, **characterised in that** the emptying openings (25, 26) discharge into the lower side of a base (19) common to the valve housing (15) and the storage container (16).

13. Ventilation device according to one of the preceding claims, **characterised in that** the storage container (16a) comprises the cylindrical valve housing (15a), at least over part of its periphery.

14. Ventilation device according to claim 13, **characterised in that** the at least one inflow opening 24a of the valve housing (15a) is arranged in a peripheral portion (50) of the valve housing (15a) left open by the storage container (16a).

15. Ventilation device according to claim 14 in conjunction with claim 3, **characterised in that** the apron (37) extends between the ends of the storage container (16a) pointing in the peripheral direction.

16. Ventilation device according to one of the preceding claims, **characterised in that** the storage container (16) and the valve housing (15) are interconnected in one piece.

## Revendications

1. Dispositif de purge d'un réservoir de carburant d'un véhicule automobile, comprenant une soupape (1) de purge ayant une boîte (15) de soupape comportant une ouverture (8) de purge, un flotteur (23) mobile monté dans la boite (15) de soupape en étant mobile entre une position de repos et une position de fermeture et un élément (20) d'étanchéité présent sur le côté supérieur du flotteur (23) et coopérant avec l'ouverture (8) de purge, le flotteur (23) étant monté, dans la position de repos, en une position inférieure dans la boite (15) de soupape et l'élément (20) d'étanchéité dégageant l'ouverture (8) de purge, tandis que, dans la position d'ouverture, le flotteur (23) en raison des forces ascensionnelles repousse l'élément (20) d'ouverture sur l'ouverture (8) de purge et la ferme,
**caractérisé par**
la configuration supplémentaire suivante :
- il y a dans la boite (15) de soupape, en une position supérieure proche de l'ouverture (8) de purge, au moins une ouverture (24) d'admission servant au passage du gaz et du carburant et en une position inférieure, une ouverture (25) de vidange, qui peut être fermée par un élément (30) d'étanchéité d'une vanne (27) d'arrêt,
- il y a une cuve (16) d'accumulation qui communique par un canal (36à) de liaison avec l'intérieur (18) de la boite (15) de soupape en un point en dessous de l'ouverture d'admission de manière à ce qu'un carburant présent à l'intérieur (18) de la boite (15) de soupape puisse s'écouler dans la cuve (16) d'accumulation, la section transversale d'écoulement du canal (36) de liaison étant plus petite que la section d'ouverture de l'ouverture (24) d'admission,
- il y a un dispositif de vidang,e par lequel du carburant peut être retiré de la cuve (16) d'accumulation.

2. Dispositif de purge suivant la revendication 1,
**caractérisé**
**en ce que** la vanne (27) d'arrêt a un élément (30) d'étanchéité flottant.

3. Dispositif de purge suivant la revendication 1 ou 2,
**caractérisé**
**en ce qu'**il y a, à une distance radiale de l'ouverture (24) d'admission, une jupe (37) s'étendant verticalement et recouvrant au moins une partie de la surface d'ouverture de l'ouverture (24) d'admission.

4. Dispositif de purge suivant la revendication 3,
**caractérisé**
**en ce que** la jupe est formée sur des parties (43) de bord marginales de l'ouverture (24) d'entrée.

5. Dispositif de purge suivant l'une des revendications précédentes,
**caractérisé**
**en ce que** le dispositif de vidange comprend une ouverture (26) de vidange présente dans la cuve d'accumulation et une vanne (27) d'arrêt la fermant par un élément (30) d'étanchéité.

6. Dispositif de purge suivant la revendication 5,
**caractérisé**
**par** un élément (30) d'étanchéité flottant.

7. Dispositif de purge suivant l'une des revendications 1 à 6,
**caractérisé**
**en ce que** le dispositif de vidange est un dispositif d'aspiration.

8. Dispositif de purge suivant l'une des revendications précédentes,
**caractérisé**
**en ce que** la cuve (16) d'accumulation communique avec l'atmosphère.

9. Dispositif de purge suivant la revendication 8,
**caractérisé**
**en ce que** la cuve (16) d'accumulation communique avec un système d'alimentation en air et de purge d'air du réservoir (4) de carburant.

10. Dispositif de purge suivant l'une des revendications précédentes en liaison avec les revendications 1 à 5,
**caractérisé**
**en ce que** l'ouverture (25) de vidange de la boite (15) de soupape et l'ouverture (26) de vidange de la cuve (16) d'accumulation peuvent être fermées par un élément (30) d'étanchéité commun.

11. Dispositif de purge suivant la revendication 10,
**caractérisé**
**en ce que** l'élément (30) d'étanchéité coopère avec un siège (34) de vanne entourant les ouvertures (25, 26) de vidange, le canal (26) de liaison reliant entre elles la boite (15) de soupape et la cuve d'accumulation étant disposé à l'intérieur d'une région entourée par le siège (34) de vanne et s'étendant entre lesdites ouvertures (25, 26).

12. Dispositif de purge suivant la revendication 10 ou 11,
**caractérisé**
**en ce que** les ouvertures (25, 26) de vidange débouchent sur le côté inférieur d'un fond (19) commue à la boîte (15) de soupape et à la cuve (16) d'accumulation.

13. Dispositif de purge suivant l'une des revendications précédentes,
**caractérisé**
**en ce que** la cuve (16a) d'accumulation entoure sur au moins une partie de son pourtour la boite (15a) de soupape qui est cylindrique.

14. Dispositif de purge suivant la revendication 13,
**caractérisé**
**en ce que** la au moins une ouverture (24a) d'admission de la boîte (15a) de soupape est disposée dans une partie (50), périphérique et laissée libre par la cuve (16a) d'accumulation, de la boîte (15a) de soupape.

15. Dispositif de purge suivant la revendication 14 en liaison avec la revendication 3,
**caractérisé**
**en ce que** la jupe (37) s'étend entre les extrémités de la cuve (16a) d'accumulation, qui sont tournées dans la direction périphérique.

16. Dispositif de purge suivant l'une des revendications précédentes,
**caractérisé**
**en ce que** la cuve (16) d'accumulation et la boite (15) de soupape sont reliées entre elles d'une seule pièce.
